# NEUE EUROPÄISCHE PATENTSCHRIFT

(11) **EP 0 813 280 B2**
(45) Veröffentlichungstag und Bekanntmachung des Hinweises auf die Entscheidung über den Einspruch: **20.06.2007**
(45) Hinweis auf die Patenterteilung: 14.08.2002
(21) Anmeldenummer: 97107340.8
(22) Anmeldetag: 03.05.1997
(51) Int. Cl.: H02G 3/30

(54) **Als Blechformteil hergestellter Ausleger**
Holding piece made of sheet metal
Bras support en tôle préformée

(30) Priorität: 15.06.1996 DE 19623956
(43) Veröffentlichungstag der Anmeldung: 17.12.1997
(73) Patentinhaber: Rico GmbH & Co. KG, 73230 Kirchheim (DE)
(72) Erfinder: Barner, Gerhard, 73230 Kirchheim/ Teck-Oetlingen (DE); Fink, Ewald, 73095 Albershausen (DE); Wennrich, Hans-Oswald, 73275 Ohmden (DE)
(74) Vertreter: Rüger, Barthelt & Abel Patentanwälte

(56) Entgegenhaltungen:
- EP-A- 0 108 222
- EP-A- 0 294 273
- WO-A-93/04612
- DE-A- 1 465 343
- DE-A- 2 626 735
- Katalog NIEDAX Kabelverlege-Systeme KR-1994

## Beschreibung

Wenn in Gebäuden große Mengen von Kabeln über gleiche Strecken verlegt werden müssen, so geschieht dies nicht, indem Kabel einzeln mit Schellen an der Wand befestigt werden, sondern mit Hilfe sogenannter Kabelrinnen oder Kabelpritschen, in denen die Kabel lose liegen. Die Kabelrinnen oder Kabelpritschen liegen ihrerseits auf Auslegern auf, die an Hängestielen befestigt sind. Um die Hängestiele an den Decken der Gebäude zu befestigen, werden sogenannte Kopfplatten verwendet, die das Bindeglied zwischen der Decke und dem betreffenden Stiel darstellen.

Der Ausleger hat eine verhältnismäßig komplizierte Gestalt, denn er benötigt zum Abtragen der Lasten entprechende Versteifungelemente sowie einen Flansch, mit dessen Hilfe der Ausleger an dem Stiel angeschraubt wird als auch einen Flansch, auf dem die Kabelrinne oder -pritsche aufliegt.

Diese beiden Flansche sind bei den aus der Praxis bisher bekannten Auslegern miteinander verschweißte Stahlteile. Sie müssen gegen Korrosion geschützt werden, was üblicherweise durch Verzinken geschieht. Wegen des Schweißvorgangs kann kein vorverzinktes Halbzeug verwendet werde, denn durch das Schweißen würde die Verzinkung unter Erzeugung giftiger Gase wegbrennen, womit die Schweißnaht und die Umgebung der Schweißnaht ungeschützt sind. Folglich können nur unverzinkte Stahlteile zum Einsatz kommen und die fertig geschweißten Ausleger müssen anschließend einer Verzinkung in einem Verzinkungsbad unterzogen werden.

Ein vorheriges Verzinken der Rohteile wäre, verglichen mit diesem Verfahren, wesentlich kostengünstiger. Es könnten die zusätzlichen Wegekosten von dem Hersteller der Ausleger zu der Galvanisieranstalt und zurück vermieden werden.

Aus der WO 93/04612 ist ein Ausleger bekannt, der aus einem einzigen Blechformteil besteht. Hierbei wird von einem Blechzuschnitt ausgegangen, der längs mehrerer Biegekanten nacheinander umgebogen wird. Nach dem Biegen entstehen an dem Ausleger ein Stielflansch, mit dem der Ausleger mit dem Stiel zu verbinden ist, sowie ein Auflageflansch auf dem die Kabelrinne aufliegt. Der Stielflansch und der Auflageflansch sind durch einen Versteifungsflansch einstückig miteinander verbunden. Außerdem geht von dem Versteifungsflansch eine Lasche aus, die Zusammen mit einer Lasche, die einstückig in den Auflageflansch übergeht, den Stielflansch bildet. Die Laschen sind miteinander verschweißt.

An der unteren Kante des Versteifungsflansches ist schließlich noch eine Versteifungsleiste abgekantet. Die Versteifungsleiste liegt nicht an der Innenseite des Stielflansches an, so dass sie zum Abtragen der vertikalen Kräfte nichts beiträgt.

Die Belastbarkeit des bekannten Auslegers ist beschränkt und ergibt sich im wesentlichen aus der Festigkeit des Stielflansches in der Umgebung der Befestigungsbohrung.

Der Stielflansch ist hier nur einseitig ausgesteift und kann sich deswegen unter Belastung verwinden, womit die Festigkeit zusammenbricht.

Ausgehend hiervon ist es deswegen Aufgabe der Erfindung, einen Ausleger zu schaffen, der aus vorverzinktem Halbzeug hergestellt werden kann, keine anschließende Schlußverzinkung erfordert und eine erhöhte Tragfähigkeit aufweist.

Diese Aufgabe wird erfindungsgemäß durch die Ausleger mit den Merkmalen des Anspruchs 1 gelöst.

Da der neue Ausleger ein einstückiges Blechformteil ist, kann zur Herstellung vorverzinktes, beispielsweise vorverzinktes, Stahlblech vom Coil eingesetzt werden. Die Materialstärke ist so gering, dass die beim Ausschneiden des Blechzuschnitts entstehenden blanken Kanten durch die vorhandenen beidseitigen Zinkschichten und die entstehenden elektrischen Felder mitgeschützt ist. Der Umformvorgang selbst beschädigt die Verzinkung nicht. Nach dem Ausstanzen des Blechzuschnitts und dem Umformen desselben zu dem gewünschten Ausleger ist diese fertig. Ein weiterer Bearbeitungsschritt und die damit eventuell verbundenen Transportaufwendungen entfallen vollständig.

Bei der erfindungsgemäßen Lösung ist lediglich ein Auflageflansch vorhanden, der an einer Seite in einen ersten Versteifungsflansch übergeht. Letzterer geht an seiner von dem Auflageflansch abliegenden Kante in einen weiteren Versteifungsflansch über, wodurch der Ausleger ein C-förmiges Querschnittsprofil erhält. Bei dieser Ausführungsform sind je ein Stielflansch von dem Auflageflansch und von dem ersten Versteifungsflansch abgebogen. Um die Lasttragfähigkeit zu erhöhen, kann sich die dem Stiel benachbarte Kante des zweiten Versteifungsflansches am Stiel oder einer Verlängerung einer der Stielflansche abstützen.

In der Zeichnung sind folgende Gegenstande dargestellt. Es zeigen:
Fig. 1 eine Prinzipdarstellung eines Kabeltragsystems, in einer perspektivischen Teilansicht,
Fig. 2 einen nicht zur Erfindung gehörenden Ausleger mit zwei seitlichen Versteifungsflanschen und drei sandwichartig übereinander liegenden Stielflanschen, in einer perspektivischen Ansicht schräg von unten,
Fig. 3 den Blechzuschnitt für den Ausleger nach Fig. 2 vor der Umformung, in einer Draufsicht,
Fig. 4 einen erfindungsgemäßen Ausleger, bei dem der Auflageflansch lediglich mit einem Versteifungsflansch versehen ist, der in einen weiteren Versteifungsflansch übergeht, der eine Art Untergurt darstellt, in einer perspektivischen Ansicht schräg von unten,
Fig. 5 den Ausleger nach Fig. 4, geschnitten längs der Linie IV-IV nach Fig. 4, und
Fig. 6 den Blechzuschnitt für den Ausleger nach Fig. 4, in einer Draufsicht.

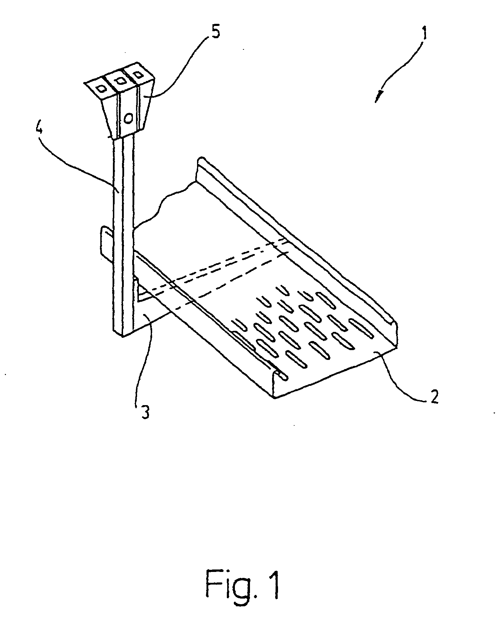

Fig. 1 zeigt ein Kabeltragsystem 1 in einer perspektivischen Ansicht. Dieses Kabeltragsystem 1, von dem lediglich ein Ausschnitt dargestellt ist, dient dazu, in Gebäuden große Bündel von Kabeln zu verlegen. Die nicht dargestellten Kabel liegen in sogenannten Kabelrinnen 2. An Stelle der gezeigten Kabelrinnen 2 können auch sogenannte Kabelpritschen zum Einsatz kommen.

Die Kabelrinnen 2 liegen in größeren Abständen von mehreren Metern auf Auslegern 3, die an Hängestielen 4 befestigt sind. Die Anbringung des Stiels 4 an der nicht dargestellten Decke des Gebäudes erfolgt mit Kopfplatten 5, die wenigstens einen Stielflansch, an dem der Stiel befestigt ist, sowie wenigstens einen Deckenflansch aufweisen, der an der Decke des betreffenden Gebäudes anzubringen ist.

Fig. 1 zeigt eine hängende Montage des Stiels 4. An Stelle der hängenden Montage kann auch eine stehende Montage in Frage kommen. In diesem Falle ist die Kopfplatte 5 mit dem Deckenflansch auf einem Boden des Gebäudes zu verschrauben.

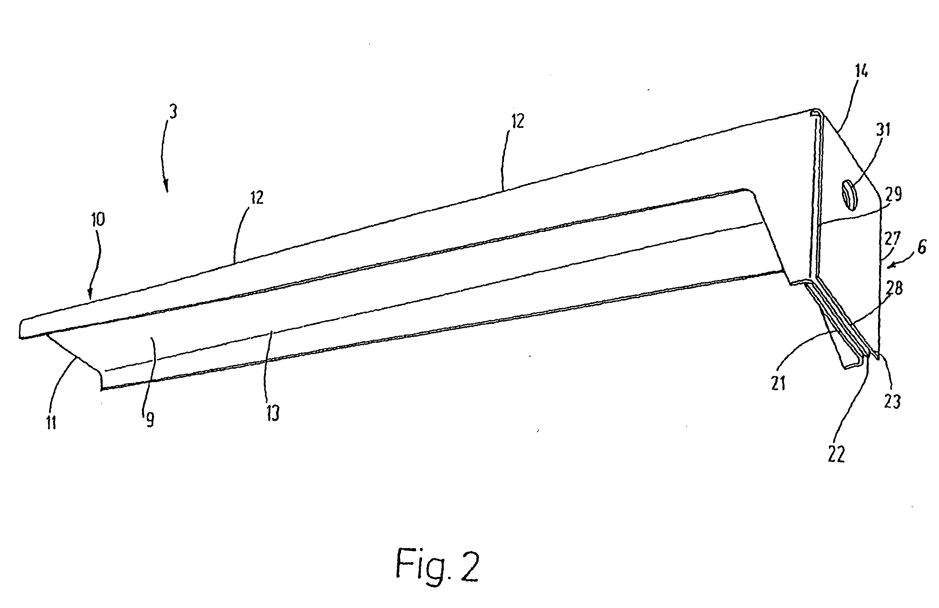

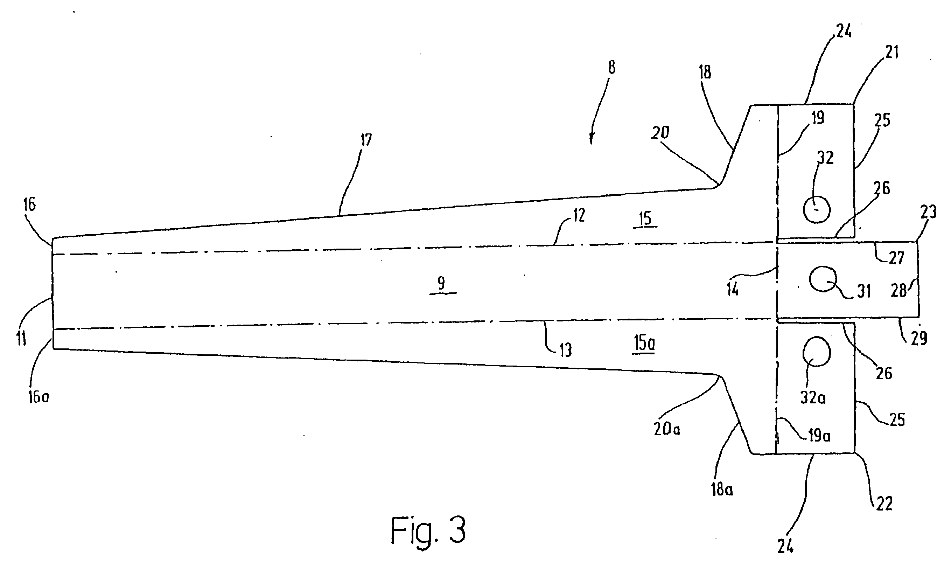

Der in Fig. 1 stark vereinfacht gezeigte Ausleger 3 ist in den Fig. 2 und 3 in unterschiedlichen Fertigungsstufen im einzelnen gezeigt. Dabei veranschaulicht Fig. 2 den fertig gebogenen Ausleger 3 in einer perspektivischen Ansicht schräg von unten. Um das Verständnis der perspektivischen Darstellung zu erleichtern, ist außerdem der erforderliche Blechzuschnitt, aus dem der Ausleger 3 hergestellt wird, in einer Draufsicht bzw. im Längsschnitt gezeigt unter gleichzeitiger Angabe der erforderlichen Biegelinien. Für die von den Biegelinien abgeteilten Felder werden dieselben Bezugszeichen verwendet wie für die fertigen Strukturen an dem endgültig geformten Ausleger 3.

Der Ausleger 3 ist ein einstückiges Blechformteil, das aus einem vorverzinkten Stahlblechzuschnitt 8 hergestellt ist. Die Ausleger 3 weist einen in der Draufsicht etwa rechteckigen Auflageflansch 9 mit einer Oberseite 10 auf, der von einer dem freien Ende des Auslegers 3 entsprechenden Schnittkante 11, zwei parallelen und voneinander beabstandeten Biegekanten 12 und 13 sowie einer parallel zu der Schnittkante 11 verlaufenden Biegekante 14 begrenzt ist.

An der Biegekante 12 geht der Auflageflansch 9 in einen ersten Versteifungsflansch 15 über, der im Grundriss etwa L-förmig ist. Der Versteifungsflansch 15 wird von einer die Verlängerung der Schnittkante 11 bildenden Schnittkante 16, einer schräg gegenüber der Biegekante 12 verlaufenden Schnittkante 17, einer im Winkel dazu sich anschließenden Schnittkante 18 sowie einer Biegekante 19 begrenzt. Die Biegekante 19 verläuft in Verlängerung der Biegekante 14, ist jedoch gegenüber dieser um die doppelte Materialstärke in Richtung auf die Schnittkanten 11 bzw. 16 versetzt. Außerdem liegt sie rechtwinklig zu der Biegekante 12.

Die Schnittkante 17 erstreckt sich im spitzen Winkel gegenüber der Biegekante 12, und zwar so, dass sich der Versteifungsflansch 15 in Richtung auf die Schnittkante 16 verjüngt. Die Schnittkante 18 dagegen konvergiert bei dem Blechzuschnitt 8 in Richtung auf die Biegekante 19, so dass die beiden Schnittkanten 17 und 18, die an einer Ausrundung 20 ineinander übergehen, einen Winkel von ca. 100° miteinander einschließen.

An der Biegekante 13 schließt sich ein Versteifungsflansch 15a an, der zu dem Versteifungsflansch 15 spiegelbildlich ist. Dementsprechend werden die dort auftretenden Schnittkanten und Biegekanten mit denselben Bezugszeichen versehen, wie die korrespondierenden Biegekanten und Schnittkanten an dem Versteifungsflansch 15, jedoch mit dem Zusatz "a".

Der Ausleger 3 weist zur Befestigung an dem Stiel 4 insgesamt drei sandwichartig übereinanderliegende Stielflansche 21, 22 und 23 auf. Diese entstehen aus rechteckigen Laschen, die in Fig. 3 mit denselben Bezugszeichen versehen sind. So ist die Lasche bzw. der spätere Stielflansch 21 über die Biegelinie 19 mit dem Versteifungsflansch 15 einstückig verbunden und wird im übrigen von Schnittkanten 24, 25 und 26 begrenzt. Die Schnittkante 25 verläuft parallel und im Abstand zu der Biegekante 19, während die beiden Schnittkanten 24 und 26 zueinander parallel und rechtwinklig zu der Schnittkante 25 sind. Der Stielflansch 22 ist im wesentlichen spiegelbildlich, weshalb die ihn begrenzenden Schnittkanten mit demselben Bezugszeichen und dem Zusatz "a" bezeichnet sind.

Der dritte Stielflansch 23 befindet sich in der Verlängerung des Auflageflansches 9 und ist über die Biegekante 14 mit diesem verbunden. Er wird im übrigen durch Schnittkanten 27, 28 und 29 begrenzt, wobei die Schnittkante 28 parallel zu der Biegekante 14 ist und die beiden Schnittkanten 27 und 29 zueinander parallel und rechtwinklig zu der Biegekante 14 verlaufen.

Die Länge der Schnittkanten 24, 26', 24a und 26a ist unter Berücksichtigung der Materialstärke und der Biegeradien im wesentlichen gleich der Länge der Biegekante 14. Ferner sind die Schnittkanten 25, 25a, 27, 29 und die Biegekanten 19 und 19a ebenfalls unter Berücksichtigung der Materialstärke und der Biegeradien im wesentlichen gleich lang.

In jedem der Stielflansche 21, 22, 23 ist jeweils eine Durchgangsöffnung 31 bzw. 32 und 32a enthalten, die so angeordnet sind, dass sie nach dem Umformen des Zuschnitts 8 deckungsgleich übereinanderliegen, wie dies Fig. 2 erkennen läßt. Die Durchgangsöffnung 31 befindet sich auf der auf der Biegekante 14 senkrecht stehenden Mittellinie und ist in Richtung auf die Biegekante 14 zu versetzt.

Damit der gewünschte sandwichartige Stapel aus Stielflanschen 21, 22 und 23 zustandekommt, sind die Biegelinien 14, 19 und 19a um die Materialstärke gegeneinander versetzt. Bei dem gezeigten Ausführungsbeispiel liegt die Biegelinie 14 am weitesten außen, damit nach dem Umformen der Stielflansch 23 außen und somit dem Stiel 4 am nächsten benachbart ist. Von dieser Biegelinie 14, um nur einmal die Materialstärke versetzt, ist die Biegelinie 19, wodurch erreicht wird, dass nach dem Biegen der Stielflansch 21 unmittelbar auf dem Stielflansch 23 aufliegt. Die Biegelinie 19a ist schließlich gegenüber der Biegelinie 14 um zwei Materialstärken versetzt. Der Stielflansch 22 kommt dadurch auf dem Stielflansch 21 zur Auflage.

Um aus dem Blechzuschnitt nach Fig. 3 den Ausleger 3 nach Fig. 2 zu erhalten, wird der Zuschnitt längs den Biegekanten 14, 19 und 19a um 90° abgekantet. Dadurch kommen die Stielflansche 21, 22 und 23 in eine Stellung, in der sie senkrecht auf einer von der Oberseite 10 des Auflageflansches definierten Ebene stehen. Sodann werden die Versteifungsflansche 15 und 15a um 90° um die Biegelinien 12 und 13-herumgebogen. Die Stielflansche 21, 22 und 23 kommen dadurch in ihre gestapelte sandwichartige Lage.

Der so erhaltene Ausleger 3 kann mit Hilfe einer durch den Stiel 4 hindurchgesteckten Befestigungsschraube, die durch die miteinander fluchtenden Durchgangsöffnungen 31, 32 und 32a hindurchführt, an dem Stiel angeschraubt werden.

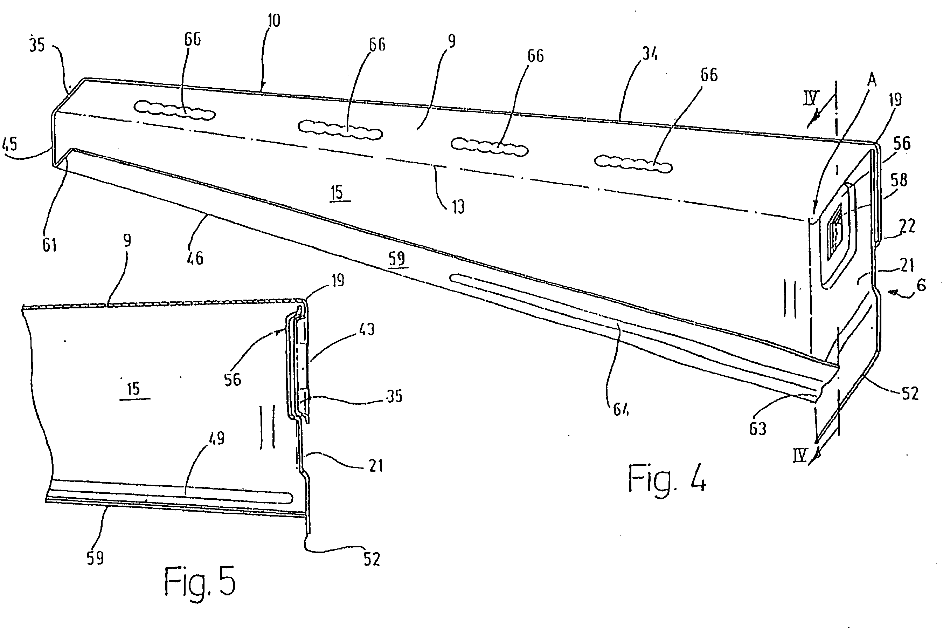

Die Fig. 4, 5 und 6 zeigen eine erfindungsgemäße Ausführungsform eines Auslegers 3 zusammen mit seinem Blechzuschnitt 8. Strukturelemente dieses Auslegers 3, die mit Strukturelementen des Auslegers 3 nach Fig. 1 übereinstimmen oder wesensgleich sind, sind mit denselben Bezugszeichen versehen.

Der besseren Orientierung wegen sei noch erwähnt, dass die mit "A" bezeichnete Ecke eine vom Betrachter wegzeigende konkave Ecke ist.

Der Ausleger 3 nach den Fig. 4 bis 6 weist einen Auflageflansch 9 mit ebener Oberseite 10 auf. Der Auflageflansch 9 hat etwa trapezförmige Gestalt und wird von zwei Biegelinien, nämlich den Biegelinien 13 und 19, sowie zwei Schnittkanten 34 und 35 begrenzt. Die Biegelinien 19 und 13 verlaufen rechtwinklig zueinander, und auch die Schnittkante 35 ist zu der Biegekante 13 rechtwinklig. Die Schnittkante 34 hingegen konvergiert, ausgehend von der Biegekante 19, in Richtung auf die Schnittkante 35.

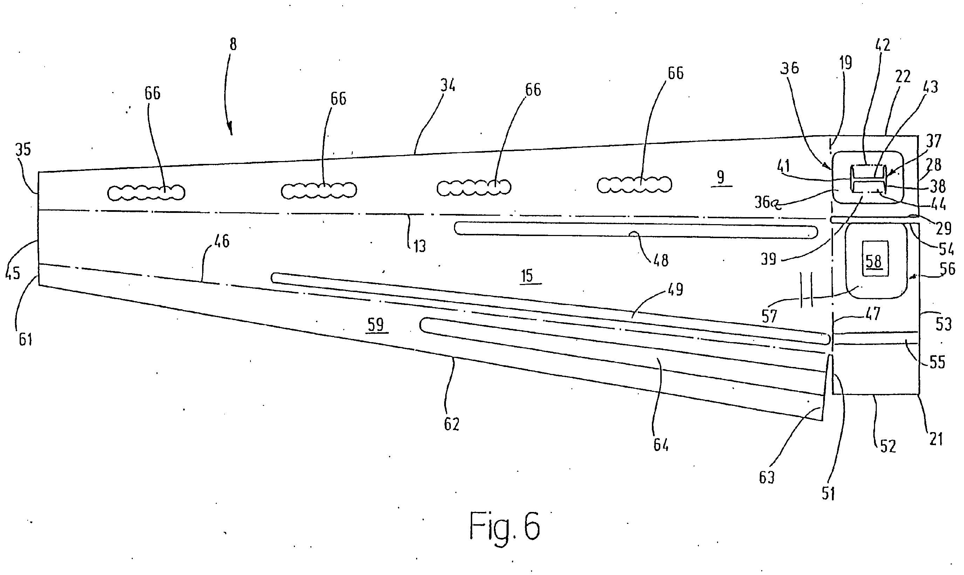

An der Biegekante 19 geht der Auflageflansch 9 in den ersten Stielflansch 22 über, der, abgesehen von der Biegekante 19, von den drei Schnittkanten 27, 28 und 29 begrenzt ist. Etwa in der Mitte enthält er eine im Grundriss rechteckige, allseits geschlossene, napfförmige Sicke 35 mit einem ebenen Boden 36, die sich dem Betrachter von Fig. 6 entgegenwölbt. Mittig in diesem Boden 36 befindet sich eine rechteckige Durchgangsöffnung 37, die von vier paarweise zueinander parallelen Rändern 38, 39, 41, 42 begrenzt ist. Die Ränder 42 und 39 sind Biegelinien, an denen an die Lochränder zwei rechteckige Laschen 43 und 44 einstückig angeformt sind. Die Tiefe der Laschen 43 und 44 entspricht der Prägetiefe der Sicke 35, d.h. wenn der Stielflansch 22 mit seiner vom Betrachter der Fig. 5 weggekehrten Seite auf einer ebenen Auflage aufliegt, stehen die freien Ränder der Laschen 43 und 44, die zu den Biegekanten 42 und 39 parallel sind, gerade eben auf der Unterlage auf.

An die Biegekante 13 schließt sich der erste Versteifungsflansch 15 an, der in der Draufsicht trapezförmig ist.

Die Begrenzungen des Versteifungsflansches 15 sind eine Schnittkante 45, die eine gerade Verlängerung der Schnittkante 35 ist, eine Biegekante 46 sowie eine Biegekante 47.

Die Biegekante 47 ist zu der Schnittkante 45 parallel und beide verlaufen rechtwinklig zu der Biegekante 13. Die Biegekante 46 hingegen konvergiert in Richtung zu der Schnittkante 45, so dass sich ein verjüngender Versteifungsflansch 15 ergibt. In der Ebene des Versteifungsflansches 15 befinden sich zwei längliche gerade Sicken 48 und 49. Die Sicke 48 verläuft parallel zu der Biegekante 13 und neben dieser, während die Sicke 49 parallel zu der Biegekante 46 verläuft.

Die Biegekante 47 trennt den Versteifungsflansch 15 von dem zweiten Stielflansch 21, der, wie gezeigt, einen rechteckigen Grundriss hat. Er ist begrenzt von der Biegekante 47 sowie einer in Verlängerung der Biegekante 47 verlaufenden kurzen Schnittkante 51, einer dazu rechtwinkligen Schnittkante 52, einer zu der Biegekante 47 parallelen Schnittkante 53 und schließlich einer Schnittkante 54, die rechtwinklig zu der Schnittkante 53 ist. Die Länge der Schnittkante 53 ist gleich der Summe aus der Länge der Biegekante 47 und der Länge der Schnittkante 51, während die Längen der beiden Schnittkanten 52 und 54 gleich der Länge der Biegekante 19 und somit gleich der Breite des Auflageflansches 9 an dessen Anfang ist; jeweils gegebenenfalls unter Berücksichtigung der Materialstärke und der Biegeradien.

Etwas oberhalb der Schnittkante 52 enthält der Stielflansch 21 eine Abkröpfung 55, durch die der zwischen der Schnittkante 52 und der Abkröpfung 55 liegende Bereich vom Betrachter weg nach unten in der Zeichenebene parallel versetzt ist. Die Abkröpfung gleicht die Dicke des Stielflansches 22 aus.

In dem zweiten Stielflansch 21 befinden sich eine weitere napfförmige Sicke 56, die in Richtung auf den Betrachter von Fig. 6 erhaben ist. Ihre Abmessungen sind so, dass sie bei dem fertig gebogenen Ausleger 3 die rechteckige napfförmige Sicke 35 von der Rückseite her übergreift, wie dies der Schnitt aus Fig. 4 erkennen läßt.

Außerdem enthält die Sicke 56 in ihrem planen Boden 57 eine mit der Öffnung 37 fluchtende rechteckige Öffnung 58.

Schließlich weist der Ausleger 3 noch einen zweiten Versteifungsflansch 59 auf, der sich über die Biegekante 46 an den ersten Versteifungsflansch 15 anschließt. Seine Gestalt ist etwa deckungsgleich mit dem Auflageflansch 9. Er wird von der Biegekante 46, einer Schnittkante 61, die in Verlängerung der Schnittkante 45, einer Schnittkante 62 und einer Schnittkante 63 begrenzt. Ausgehend von der Schnittkante 63 verjüngt sich der Versteifungsflansch 59 in Richtung auf die Schnittkante 61. Er enthält außerdem eine längliche gerade Sicke 64, die von der Schnittkante 63 ausgeht, und etwa bis zur Mitte des Versteifungsflansches 59, bezogen auf dessen Längserstreckung, verläuft. Sie dient der Verstärkung.

Das Umformen des Zuschnitts 8 erfolgt in der Weise, dass zunächst der zweite Stielflansch 21 längs seiner Biegelinie 47 aufgerichtet wird, bis er rechtwinklig zu der durch den Versteifungsflansch 15 definierten Ebene verläuft. Sodann wird der Zuschnitt längs den Biegekanten 13 und 46 in entgegengesetzte Richtungen abgekantet, d.h. nach dem Abkanten erheben sich der Auflageflansch 9 und der zweite Verstärkungsflansch 59 zu derselben Seite über den Versteifungsflansch 15, wodurch ein Querschnitt durch den Ausleger 3 parallel zu dem Stielflansch 21 eine C-förmige Gestalt bekommt. Den Rücken des "C" bildet der Versteifungsflansch 15, während dessen oberer und unterer Schenkel der Auflageflansch 9 bzw. der zweite Versteifungsflansch 59 sind.

Schließlich wird der erste Stielflansch 23 längs der Biegelinie 19 um 90° umgebogen, so dass er flach auf dem Stielflansch 21 aufliegt. Diese Konfiguration ist aus Fig. 4 ersichtlich. In diesem Zustand liegt die napfförmige Sicke 35 in dem Innenraum der napfförmigen Sicke 56.

Als letzte Maßnahme werden noch die Laschen 43 und 44, wie oben erwähnt, herausgebogen, um die Böden 36 und 57 der beiden Sicken 35 und 56 abzustützen.

Im Gebrauch ist der Ausleger 3 mit seinen beiden, teilweise sandwichartig übereinanderliegenden Stielflanschen 23 und 21 an dem Stiel 4 anliegend festgeschraubt. Dabei führt die Befestigungsschraube durch die miteinander fluchtenden Öffnungen 37 und 58. Die beim Anziehen der Schraube auftretenden Anzugskräfte werden über die aufgerichteten Laschen 43 und 44 unmittelbar in den Stiel eingeleitet und verhindern selbst bei großen Anzugsmomenten ein Verformen der versteifenden Sicken 35 und 56.

Die Länge des zweiten Versteifungsflansches 59 ist so bemessen, dass er bereits im unbelasteten Zustand mit seiner Schnittkante 63 an der benachbarten Innenseite des Stielflansches 21 unterhalb der Abkröpfung 55 anstößt, die in Richtung auf den Stiel 4 zeigt und ersichtlich die Dicke des Stielflansches 22 ausgleicht. Dadurch kann der zweite Versteifungsflansch wie ein Untergurt wirken, der sich im montierten Zustand über den Stielflansch 21 an dem Stiel 4 abstützen kann.

Zur Befestigung der Kabelrinnen kann der Auflageflansch 9 noch mehrere längliche Öffnungen 66 enthalten, die an beiden Rändern gleich verteilte Einschnürungen enthalten. Der Zweck der Einschnürungen besteht darin, ein seitliches Auswandern von Schrauben, die durch die Rinnen hindurch in die Langlöcher 66 eingedreht werden, zu verhindern.

Die beschriebenen Ausleger sind aus einem einzigen Blechzuschnitt durch Umformen hergestellt. Aufgrund des Umformungsvorgangs entsteht ein Stielflansch, an dem der Stiel zu befestigen ist sowie wenigstens ein Auflageflansch auf den die Kabelrinne aufzulegen ist.

## Patentansprüche

1. Ausleger (3), der zum Anbringen an Stielen (4) von Kabeltragkonstruktionen (1) eingerichtet und in Gestalt eines einstückigen Blechformteils (8) ausgeführt ist, das durch Umformen eines einzigen Blechzuschnitts (8) gebildet ist und aufweist:
einen ersten zur Anlage an dem Stiel (4) eingerichteten Stielflansch (22), der zwei zueinander parallele Flachseiten aufweist und der wenigstens eine rechteckige Durchgangsöffnung (37) für Befestigungsmittel enthält,
einen als Auflage für Kabelrinnen (.2) oder -pritschen eingerichteten Auflageflansch (9), der über eine Biegekante (19) einstückig in den ersten Stielflansch (22) übergeht, wobei der Auflageflansch (9) eine Ebene definiert, die senkrecht auf einer von dem Stielflansch (2) definierten Ebene steht,
einen ersten Versteifungsflansch (15), der zumindest unmittelbar in den Auflageflansch (9) übergeht, mit diesem ein L-förmiges Querschnittsprofil bildet und im wesentlichen dessen Länge aufweist,
einen zweiten Stielflansch (21), der über eine Biegekante (47) einstückig in den ersten Versteifungsflansch (15) übergeht, der zwei zueinander parallele Flachseiten aufweist und der wenigstens eine rechteckige Durchgangsöffnung (58) für Befestigungsmittel enthält,
einen zweiten Versteifungsflansch (59), der an der von dem Auflageflansch (9) abliegenden Längskante (46) des ersten Verteifungsflansches (15) über eine Biegekante (46) unmittelbar in den ersten Versteifungsflansch (15) übergeht, derart, dass der Ausleger (3) in einem Schnitt parallel zu der Stiellängsrichtung C-förmig ist,
wobei jede Durchgangsöffnung (37,58) in einer tiefgezogenen Mulde (35,56) liegt und die beiden Mulden (35,56) ineinander gestapelt sind,
die beiden Stielflansche (21,22) mit ihren Flachseiten unmittelbar aufeinander liegen und
wobei von dem Rand (39,42) einer (37) der beiden Durchgangsöffnungen (37, 58) Laschen (43,44) in Richtung auf den Stiel (4) ausgehen, deren Tiefe (Breite) der Tiefe der Mulde (35,56) entspricht.

2. Ausleger nach Anspruch 1, **dadurch gekennzeichnet, dass** der von dem Auflageflansch (9) abgebogene erste Stielflansch (22) auf der in der Gebrauchsstellung dem Stiel (4) zugekehrten Seite des zweiten Stielflansches (21) liegt.

3. Ausleger nach Anspruch 1, **dadurch gekennzeichnet, dass** einer der Stielflansche (21,22), vorzugsweise der von dem ersten Versteifungsflansch (15) ausgehende zweite Stielflansch (21), bezogen auf die Gebrauchsstellung eine nach unten über den zweiten Versteifungsflansch (59) hinausragende Verlängerung aufweist.

4. Ausleger nach Anspruch 3, **dadurch gekennzeichnet, dass** der zweite Versteifungsflansch (59) derart bemessen ist, dass er an der Verlängerung des Stielflansches (21) anstößt.

5. Ausleger nach einem der vorhergehenden Ansprüche, **dadurch gekennzeichnet, dass** die Versteifungsflansche (15,59) in Längsrichtung verlaufende gerade Sicken (48,49,64) enthalten.

## Claims

1. Bracket (3), which is fitted for attachment to struts (4) of cable suspension structures (1) and is configured in the form of a single-piece sheet metal shaped part (8), which is formed by shaping a single sheet metal blank (8) and has:
a first strut flange (22) fitted to rest against the strut (4), having two parallel flat side and containing at least one rectangular passage (37) for fastening elements,
a supporting flange (9), which is fitted as a support for cable channels (2) or beds and merges in one piece into the first strut flange (22) via a bending edge (19), wherein the supporting flange (9) defines a plane, which stands perpendicularly on a plane defined by the strut flange (22),
a first reinforcing flange (15), which merges at least directly into the supporting flange (9), forms an L-shaped cross-sectional profile with this and has substantially the length thereof,
a second strut flange (21), which merges in one piece into the first reinforcing flange (15) via a bending edge (47), which has two parallel flat sides and which contains at least one rectangular passage (58) for fastening elements,
a second reinforcing flange (59), which on the longitudinal edge (46) of the first reinforcing flange (15) remote from the supporting flange (9) merges directly into the first reinforcing flange (15) via a bending edge (46) in such a way that the bracket (3) is C-shaped in a section parallel to the longitudinal direction of the strut,
wherein each passage (37, 58) lies in a deep-drawn recess (35, 56) and the two recesses (35, 56) are stacked one inside the other,
the two strut flanges (21, 22) lie directly one on top of the other with their flat sides, and
wherein tabs (43, 44) extend from the edge (39, 42) of one (37) of the two passages (37, 58) in the direction of the strut (4), the depth (width) of which corresponds to the depth of the recess (35, 56).

2. Bracket according to Claim 1, **characterised in that** the first strut flange (22) bent off from the supporting flange (9) lies on the side of the second strut flange (21) facing the strut (4) in the position of use.

3. Bracket according to Claim 1, **characterised in that** one of the strut flanges (21, 22), preferably the second strut flange (21) extending from the first reinforcing flange (15), has an extension projecting downwards beyond the second reinforcing flange (59) in relation to the position of use.

4. Bracket according to Claim 3, **characterised in that** the second reinforcing flange (59) is dimensioned such that it abuts against the extension of the strut flange (21).

5. Bracket according to one of the preceding claims, **characterised in that** the reinforcing flanges (15, 59) contain straight crimps (48, 49, 64) running in the longitudinal direction.

## Revendications

1. Bras-support en porte-à-faux (3) agencé de manière à pouvoir être fixé à des suspentes (4) de systèmes de supportage de câbles (1), réalisé sous la forme d'un élément (8) façonné en tôle, monobloc, qui est obtenu par formage d'un flan de tôle (8) unique et présente
une première aile de liaison à la suspente (22) aménagée pour venir en appui sur la suspente (4), qui présente deux faces planes mutuellement parallèles et au moins une ouverture débouchante (37) rectangulaire pour des moyens de fixation,
une aile d'appui (9) formant appui pour des chemins de câbles (2) ou des goulottes à câbles, qui se raccorde par une arête de pliage (19) à la première aile de liaison à la suspente (22), l'aile d'appui (9) définissant un plan qui est perpendiculaire à un plan défini par l'aile de liaison à la suspente (22),
une première aile de rigidification (15) qui se raccorde d'une pièce au moins directement à l'aile d'appui (9), forme avec celle-ci un profilé à section transversale en forme de L, et présente sensiblement la longueur de ce dernier,
une seconde aile de liaison à la suspente (21) qui se raccorde d'une pièce par une arête de pliage (47) à la première aile de rigidification (15), présente deux faces planes mutuellement parallèles et comporte au moins une ouverture débouchante (58) rectangulaire pour des moyens de fixation,
une seconde aile de rigidification (59) qui au niveau du bord longitudinal (46) de la première aile de rigidification (15) éloigné de l'aile d'appui (9) se raccorde par une arête de pliage (46) directement à la première aile de rigidification (15) de sorte que le bras-support (3), dans une coupe parallèle à la direction longitudinale de la suspente, a une forme de C,
chaque ouverture débouchante (37, 58) étant disposée dans une cuvette (35, 56) venue d'emboutissage et les deux cuvettes (35, 56) étant emboîtées l'une dans l'autre,
les deux ailes de liaison à la suspente (21, 22) étant appliquées directement l'une sur l'autre par leur face plane et
des pattes (43, 44) s'étendant à partir du bord (39, 42) de l'une (37) des deux ouvertures débouchantes (37, 58) en direction de la suspente (4), pattes dont la profondeur (longueur) correspond à la profondeur de la cuvette (35, 56).

2. Bras-support en porte-à-faux selon la revendication 1, **caractérisé en ce que** la première aile de liaison à la suspente (22), pliée à partir de l'aile d'appui (9), est disposée sur la face de la seconde aile de liaison à la suspente (21) qui, en position d'utilisation, est tournée vers la suspente (4).

3. Bras-support en porte-à-faux selon la revendication 1, **caractérisé en ce que** l'une des ailes de liaison à la suspente (21, 22), de préférence la seconde aile de liaison à la suspente (21) qui part de la première aile de rigidification (15), rapporté à la position d'utilisation, présente un prolongement qui s'étend vers le bas, au-delà de la deuxième aile de rigidification (59).

4. Bras-support en porte-à-faux selon la revendication 3, **caractérisé en ce que** la deuxième aile de rigidification (59) est dimensionnée de telle sorte qu'elle vienne en contact avec le prolongement de l'aile de liaison à la suspente (21).

5. Bras-support en porte-à-faux selon une des revendications précédentes, **caractérisé en ce que** les ailes de rigidification (15, 59) comportent des moulures (48, 49, 64) rectilignes qui s'étendent dans la direction longitudinale.
